# EUROPÄISCHE PATENTSCHRIFT

(11) **EP 3 721 098 B1**
(45) Veröffentlichungstag und Bekanntmachung des Hinweises auf die Patenterteilung: **23.06.2021**
(21) Anmeldenummer: 18829786.5
(22) Anmeldetag: 14.12.2018
(51) Int. Cl.: F16B 5/02, B60R 16/02

(54) **TOLERANZAUSGLEICH FÜR FLACHTEILE**
TOLERANCE COMPENSATION DEVICE FOR FLAT COMPONENTS
COMPENSATION DES TOLÉRANCES POUR PIÈCES PLATES

(30) Priorität: 19.03.2018 DE 102018106312
(43) Veröffentlichungstag der Anmeldung: 14.10.2020
(73) Patentinhaber: Auto-Kabel Management GmbH, 79688 Hausen i.W. (DE)
(72) Erfinder: ATTARZADEH, Amir Hossein, 41179 Mönchengladbach (DE); KASZUBOWSKI, Franz-Heinz, 41849 Wassenberg (DE)
(74) Vertreter: Cohausz & Florack
(86) Internationale Anmeldenummer: PCT/EP2018/085017
(87) Internationale Veröffentlichungsnummer: WO 2019/179649

(56) Entgegenhaltungen:
- WO-A1-2005/071271
- DE-A1-102016 215 033
- DE-C1- 10 214 378
- DE-U1-202013 007 579
- JP-A- 2003 343 522

## Beschreibung

Der Gegenstand betrifft einen Toleranzausgleich umfassend ein Flachteil mit einer ersten Ausnehmung zur Aufnahme eines Bolzens eines Anbauteils, und einem Toleranzschieber mit einer zweiten Ausnehmung zur Aufnahme des Bolzens.

Anschlussbolzen sowie Kontaktbolzen werden in der Regel auf Anbauteilen mittels Schweißrobotern aufgeschweißt. Während des Verschweißens kommt es produktionsbedingt zu Toleranzen in der Position des Bolzens. Sollen nun an solchen Bolzen starre Flachleitungen angeordnet werden, so stellen diese Toleranzen ein Problem dar. Da eine Flachleitung starr ist und nicht beliebig gebogen werden kann, ist ein Toleranzausgleich, anders als bei biegeschlaffen Leitungen, kaum möglich. Dies gilt insbesondere, wenn an den Flachteilen Aufnahmebohrungen für die Bolzen vorgesehen sind, die in ihrem Durchmesser lediglich geringfügig größer sind als der Durchmesser des Bolzens.

Wenn ein Bolzen mit größtmöglicher Toleranzabweichung an dem Anbauteil befestigt ist, kann es dazu kommen, dass die Flachleitung nicht mehr an dem Bolzen befestigt werden kann, da der Bolzen nicht in die Ausnehmung in der Flachleitung eingesteckt werden kann. Dies ist insbesondere in automotiven Anwendungen problematisch, bei denen entlang der Produktionsstraße Verzögerungen des Produktionsprozesses möglichst zu vermeiden sind. Aus der US 2015/054298 A1 ist ein Toleranzausgleich für einen Bolzen bekannt. Dieser ist jedoch nicht auf einen starren Flachleiter aufschiebbar.

Aus diesem Grunde lag dem Gegenstand die Aufgabe zugrunde, die Befestigung eines Flachteils an einem Bolzen zu optimieren, insbesondere die Möglichkeit zu schaffen, eine starre Flachleitung an einem in seiner Position toleranzbehafteten Bolzen zu fixieren.

Diese Aufgabe wird durch einen Toleranzausgleich nach Anspruch 1 gelöst. Das bevorzug starre Flachteil kann integraler Bestandteil einer bevorzugt starren Flachleitung oder als Anbauteil an einer Flachleitung befestigt sein. Das Flachteil hat eine Längserstreckung und eine Quererstreckung. Ausgehend von einer stirnseitigen Kante erstreckt sich das Flachteil in Längserstreckung in einer Längsrichtung (nachfolgend auch Y-Achse genannt). Die stirnseitige Kante des Flachteils erstreckt sich quer, bevorzugt senkrecht zur Längsrichtung in einer Querrichtung (nachfolgend auch X-Achse genannt).

Das Flachteil hat eine Ausnehmung zur Aufnahme eines Bolzens eines Anbauteils. Ein solcher Bolzen kann beispielsweise ein angeschweißter Befestigungsbolzen an einer Kfz-Karosse, einem Motor, einem Getriebe, eine Blechteil oder einem sonstigen Anbauteil in einem Kfz sein. Auch kann ein Bolzen ein Kontaktbolzen sein, zum elektrischen Kontaktieren des Flachteils mit dem Anbauteil.

An dem Flachteil angeordnet ist ein Toleranzschieber, in dem ebenfalls eine Ausnehmung zur Aufnahme des Bolzens vorgesehen ist. Der Toleranzschieber ist beweglich auf dem Flachteil angeordnet. Dazu ist der Toleranzschieber insbesondere in Längsrichtung entlang des Flachteils verschiebbar.

Zur Aufnahme eines toleranzbehafteten Bolzens ist es notwendig, dass die erste Ausnehmung in dem Flachteil größer ist, als der Durchmesser des Bolzens. Insbesondere das lichte Maß der ersten Ausnehmung muss größer sein, als die größte Querschnittserstreckung des Bolzens. Dann kann der Bolzen, auch wenn er toleranzbehaftet von seiner Soll Position abweichend angebracht ist, in die erste Aufnahme eingesteckt werden, ohne dass die Flachleitung gebogen, gestaucht oder in sonstiger Weise verformt werden müsste, um eine Passung herzustellen.

Vorgeschlagen wird, dass die erste Ausnehmung in einer Richtung entlang der Längsachse des Flachteils eine größere Erstreckung hat als die zweite Ausnehmung in dieser Richtung. Durch diese größere Erstreckung kann der Bolzen bei einer Abweichung seiner Positionierung in dieser Richtung nach wie vor in die erste Ausnehmung eingesteckt werden. Außerdem kann der Toleranzschieber danach auf den Bolzen aufgeschoben werden und der Bolzen kann passgenau in die Ausnehmung des Toleranzschiebers eingesteckt werden. Anschließend kann der Bolzen in einer üblichen Weise an dem Toleranzschieber, z.B. durch Anziehen einer Mutter, befestigt werden.

Ferner kann die erste Ausnehmung in einer Richtung quer zur Längsachse des Flachteils eine Erstreckung haben, die ebenfalls größer ist, als der Durchmesser des Bolzens. Dadurch, dass die Ausnehmung sowohl in der Richtung der Längsachse als auch in der Richtung quer zur Längsachse, insbesondere in den X- und Y-Achsen größere Erstreckungen aufweist als der Bolzen, kann ein toleranzbehafteter Bolzen ohne weiteres in die erste Ausnehmung eingesteckt werden. Um den Bolzen dann jedoch zu befestigen, ist der Toleranzschieber vorgesehen. Dazu ist die Erstreckung der ersten Ausnehmung in Richtung quer zur Längsachse des Flachteils zumindest so groß wie die Erstreckung der zweiten Ausnehmung in dieser Richtung. Sowohl Toleranzschieber als auch Flachteil ermöglichen somit einen Toleranzausgleich des Bolzens in der Richtung quer zur Längsachse, insbesondere in x-Richtung. Da der Toleranzschieber verschiebbar auf dem Flachteil angeordnet ist, kann er an einer beliebigen Position entlang der Längsachse über der ersten Ausnehmung positioniert werden. Hierdurch ist der Toleranzausgleich in der Längsachse, insbesondere der y-Richtung möglich.

Der Toleranzschieber ist zur Aufnahme des Bolzens in der ersten und der zweiten Ausnehmung derart an dem Flachteil angeordnet, dass er in einer Richtung entlang der Längsachse des Flachteils über die erste Ausnehmung verschiebbar ist.

Durch diese Ausgestaltung ist es zunächst möglich, einen Toleranzausgleich in der Längsachse vorzunehmen, in dem der Toleranzschieber so über der ersten Ausnehmung positioniert wird, dass die erste Ausnehmung und die zweite Ausnehmung zum Bolzen fluchtend sind und der Bolzen in die erste und zweite Ausnehmung eingeschoben werden kann. Da dabei gleichzeitig die zweite Ausnehmung eine größere Erstreckung in der Richtung quer zur Längsachse, insbesondere zur X-Achse hat, erfolgt gleichzeitig ein Toleranzausgleich entlang dieser Achse.

Abschließend kann der Bolzen an dem Toleranzausgleich befestigt werden, insbesondere verschraubt werden, in dem eine Mutter oder ein sonstiges Befestigungsmittel auf dem Bolzen aufgeschraubt wird und das Befestigungsmittel durch den Toleranzschieber gegen das Flachteil drückt und mithin das Flachteil gegen das Anbauteil, an dem der Bolzen befestigt ist.

In der automatisierten oder teilautomatisierten Produktion ist es notwendig, dass der Toleranzschieber mit einfachen Handgriffen auf dem Bolzen positioniert werden kann. Um zu verhindern, dass der Toleranzschieber verloren geht, wird vorgeschlagen, dass der Toleranzschieber verliersicher an dem Flachteil angeordnet ist. Dadurch ist der Toleranzausgleich stets montagefertig, ohne dass befürchtet werden muss, dass ein Teil fehlt.

Das Flachteil ist von einer stirnseitigen Kante bis in die erste Ausnehmung geschlitzt ist. Durch die Schlitzung ist es möglich, das Flachteil im Bereich des stirnseitigen Endes entlang der X-Achse elastisch zu stauchen. Hierdurch kann ein Aufschieben des Toleranzschiebers auf das stirnseitige Ende des Flachteils erleichtert sein. Insbesondere kann durch das Zurückfedern des Flachteils im Bereich des stirnseitigen Endes der Toleranzschieber in seiner Position gehalten sein, insbesondere klemmend gehalten sein. Dabei wird vorgeschlagen, dass die stirnseitige Kante durch den Schlitz elastisch verformbar ist. Hierdurch kann die stirnseitige Kante komprimiert werden und der Toleranzschieber durch diese Kompression auf die stirnseitige Kante aufgeschoben werden. Federt die Kante danach zurück, so kann eine nach außen auf die Längskanten wirkende Kraft den Toleranzschiebe einspannen.

Gemäß einem Ausführungsbeispiel wird vorgeschlagen, dass der Toleranzschieber auf einer breiten Oberfläche des Flachteils angeordnet ist und eine Längskante des Flachteils, bevorzugt beide Längskanten des Flachteils hintergreift. Das Flachteil hat bevorzugt eine oder zwei stirnseitige Flächen, zwei breite Oberflächen und zwei schmalen Seitenflächen. Die Seitenflächen und die breiten Oberflächen sind durch die Längskanten begrenzt. Die Stirnfläche ist durch die stirnseitigen Kanten begrenzt. Der Toleranzschieber hintergreift bevorzugt die Längskanten des Flachteils. Dabei liegt der Toleranzschieber U-förmig und/ oder C-förmig auf der breiten Oberfläche auf und hat seitliche Erstreckungen, welche die Längskanten des Flachteils hintergreifen.

An der Seitenfläche des Flachteils, auch Schmalseite genannt, kann eine Nut vorgesehen sein. Es wird vorgeschlagen, dass der Toleranzschieber in diese Nut eingreift und an dieser Nut geführt ist. Hierdurch wird die Bewegung des Toleranzschiebers entlang des Flachteils definiert. Die Nut erstreckt sich bevorzugt zumindest entsprechend der ersten Ausnehmung in der Längsachse. Bevorzugt kann die Nut von der Stirnfläche ausgehend soweit in das Flachteil geführt werden, bis das der Stirnseite abgewandte Ende der ersten Ausnehmung erreicht ist. Auch kann die Nut über das Ende der ersten Ausnehmung hinaus erstreckt sein.

Der Toleranzschieber kann nicht nur außen an dem Flachteil angreifen, sondern er kann auch an den Innenflächen der ersten Ausnehmung geführt sein. Aus diesem Grunde wird vorgeschlagen, dass der Toleranzschieber in der ersten Ausnehmung geführt ist. Insbesondere kann der Toleranzschieber in einer an einer Innenkannte der Ausnehmung angeordneten Nut geführt sein. Auch ist es möglich, dass der Toleranzschieber eine Innenkannte der Ausnehmung umgreift. Dadurch, dass der Toleranzschieber in der Ausnehmung geführt ist, lässt sich der Toleranzausgleich besonders klein bauend in der Höhe ausführen. Dies kann insbesondere bei beengten Bauräumen vorteilhaft sein.

Die erste Ausnehmung ist bevorzugt rechteckig oder quadratisch und die zweite Ausnehmung ist bevorzugt ein Langloch. Die zweite Ausnehmung hat dabei bevorzugt in y-Richtung eine Erstreckung, die in etwa dem Durchmesser des Bolzens entspricht.

Dahingegen kann die Erstreckung in der x-Richtung größer als der Durchmesser des Bolzens sein, so dass durch den Toleranzschieber ein Toleranzausgleich in x-Richtung möglich ist.

Gemäß einem vorteilhaften Ausführungsbeispiel wird vorgeschlagen, dass die Richtung quer zur Längsachse des Flachteils senkrecht zur Längsachse des Flachteils verläuft. x- und y-Richtung bzw. x- und y-Achse stehen somit senkrecht aufeinander.

Gemäß einem Ausführungsbeispiel wird vorgeschlagen, dass die Ausnehmung in der Richtung entlang der Längsachse des Flachteils und in der Richtung quer zu der Längsachse eine Erstreckung hat, die zumindest einer Toleranz der Position des Bolzens an dem Anbauteil entspricht.

Gemäß einem Ausführungsbeispiel wird vorgeschlagen, dass der Toleranzschieber klemmend an dem Bolzen gehalten ist. Nachdem die erste und die zweite Ausnehmung auf den Bolzen aufgesteckt wurden, lässt sich der Bolzen an dem Toleranzausgleich durch beispielsweise Verschrauben klemmend fixieren.

Auch ist es möglich, dass der Toleranzschieber aus einem Metall oder einem Kunststoff gebildet ist. Auch kann das Flachteil aus Metall oder einem Kunststoff gebildet sein.

Eine Flachleitung kann sich beispielsweise entlang eines Unterbodens oder entlang einer Mittelkonsole in einem Fahrzeug erstrecken. Dabei kann die Erstreckung insbesondere vom Motorraum bis in den Kofferraum sein. Andere Verlegungen der Flachleitungen sind ebenfalls möglich. Diese langen Flachleitungen haben in der Regel Abgänge, welche elektrisch an Bolzen befestigt werden. Solche Abgänge können insbesondere über sogenannte Anschlussboxen, die an dem Flachleiter fixiert sind, realisiert werden. An den Anschlussboxen können die elektrischen Anschlüsse und gegebenenfalls abgesicherte Abgänge von der Flachleitung vorgesehen sein. Ausgangsseitig der Anschlussboxen können Anschlusslaschen vorgesehen sein, die im Sinne eines zuvor beschriebenen Toleranzausgleichs gebildet sind. Somit kann eine Flachleitung im Fahrzeug verlegt werden und die Fixierung und/oder die elektrische Kontaktierung der Flachleitung kann über den Toleranzausgleich erfolgen. Dabei kann die Längserstreckung des Toleranzausgleichs quer, bevorzugt senkrecht zur Längserstreckung der Flachleitung sein. Auch ist es möglich, dass das Flachteil selbst eine Flachleitung ist. Durch die Anschlussboxen können entlang einer Flachleitung eine Mehrzahl an Abgängen realisiert werden, die gleichzeitig auch mechanische Fixierungen der Flachleitung darstellen können. Auch ist es denkbar, dass lediglich mechanische Fixierungen der Flachleitung durch entsprechende Toleranzausgleiche realisiert sind.

Ein weiterer Aspekt ist ein System mit einem Toleranzausgleich wie zuvor beschrieben und einem Anbauteil, wobei ein Flachteil mit dem Toleranzausgleich an einem an dem Anbauteil angeordneten Bolzen befestigt ist, wobei der Bolzen toleranzbehaftet an dem Anbauteil befestigt ist und durch die erste und die zweite Ausnehmung geführt ist.

Nachfolgend wird der Gegenstand anhand einer Ausführungsbeispiele zeigenden Zeichnung näher erläutert. In der Zeichnung zeigen:
- Fig. 1: Eine Ansicht eines nicht beanspruchten Flachteils;
- Fig. 2a, b: Ansichten eines Toleranzschiebers;
- Fig. 3a, b: Draufsichten auf einen Bolzen;
- Fig. 4a, b: Ein nicht beanspruchter Toleranzausgleich;
- Fig. 5a, b: Ein nicht beanspruchter Toleranzausgleich;
- Fig. 6: eine Seitenansicht eines Toleranzschiebers gemäß einem Ausführungsbeispiel;
- Fig. 7a-c: Ein Toleranzausgleich gemäß einem Ausführungsbeispiel;
- Fig. 8: Ein Toleranzausgleich gemäß einem Ausführungsbeispiel.
- Fig. 9: zeigt eine nicht beanspruchte Anordnung von Toleranzausgleichen an einem mehrschichtigen Flachleiter

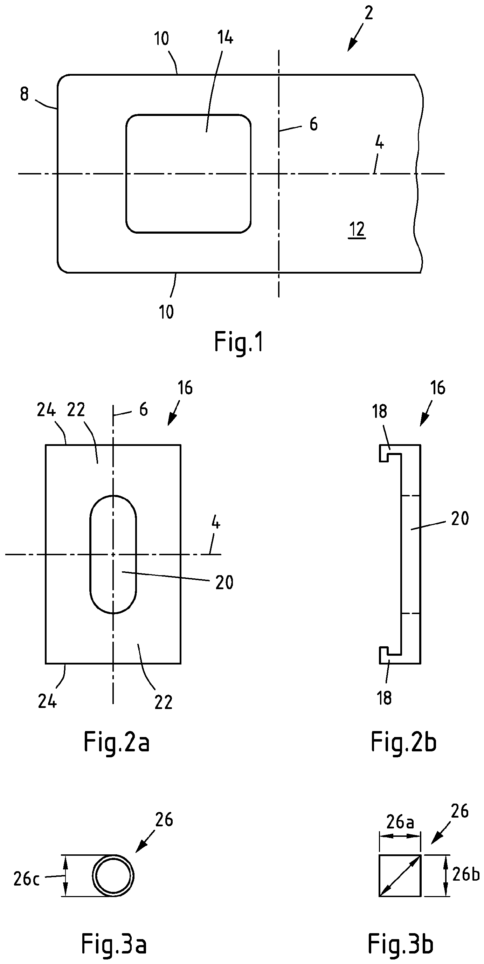

Fig. 1 zeigt ein Flachteil 2, welches eine Längserstreckung entlang einer Y-Achse 4 und eine Quererstreckung entlang einer X-Achse 6 aufweist. Parallel zur X-Achse 6 verlaufen die stirnseitigen Kanten 8. Parallel zur Y-Achse verlaufen die Längskanten 10. In der breiten Oberfläche 12 des Flachteils ist eine erste Ausnehmung 14 vorgesehen.

Die Ausnehmung 14 kann als Langloch gebildet sein. Die Erstreckung der Ausnehmung 14 entlang der Y-Achse 4 ist dabei bevorzugt größer als die Erstreckung der Ausnehmung 14 entlang der X-Achse 6. Die Ausmaße der Ausnehmung 14 sind derart, dass die Erstreckung in die Richtungen der X-Achse 6 und Y-Achse 4 größer sind, als maximale Toleranzen eines Bolzens an einem Anschlussteil.

Auf das Flachteil 2 gemäß der Fig. 1 kann ein Toleranzschieber 16 aufgeschoben werden, wie er in den Fig. 2a, b gezeigt ist. In der Fig. 2a ist eine Draufsicht auf einen Toleranzschieber 16 gezeigt. Der Toleranzschieber 16 hat eine Ausdehnung entlang der X-Achse 6, die entweder etwas größer ist als die Ausdehnung entlang der X-Achse 6 des Flachteils 2 oder der Erstreckung der Ausnehmung 14 entlang der X-Achse 6 entspricht. Im ersten Fall kann der Toleranzschieber 16 wie in Fig. 2b gezeigt, mit äußeren Armen 18 versehen sein, die das Flachteil 2 entlang der Längskanten 10 umgreifen können. Im letzteren Fall ist es möglich, dass der Toleranzschieber 16 in die Ausnehmung 14 eingesetzt wird. Beides wird nachfolgend noch gezeigt werden.

In dem Toleranzschieber 16 ist eine Ausnehmung 20 vorgesehen. Die Ausnehmung 20 hat entlang der X-Achse 6 bevorzugt eine gleiche Erstreckung wie die Ausnehmung 14, kann jedoch auch um das Maß der Stege 22, welche die Ausnehmung 20 in Richtung der Längskanten 24 begrenzt, verkleinert sein.

In y-Richtung 4 hat die Ausnehmung 20 eine kleinere Erstreckung als die Ausnehmung 14. Insbesondere ist die Erstreckung der Ausnehmung 20 in Richtung der Y-Achse 4 bevorzugt nur geringfügig größer als ein Durchmesser eines Bolzens.

Die Arme 18 können c-förmig sein, um so beispielsweise das Flachteil 2 entlang der Längskanten 10 vollständig zu umgreifen und ggf. zu hintergreifen oder um in eine Nut, welche an einer Seitenfläche angeordnet ist, einzugreifen.

Bolzen, an denen ein gegenständlicher Toleranzausgleich befestigt werden soll, können unterschiedliche Formen haben. Fig. 3a und b zeigen beispielhaft solche unterschiedlichen Formen. Ein Bolzen 26 kann beispielsweise einen Durchmesser 26c aufweisen. Dies ist in Fig. 3a gezeigt.

In der Fig. 3b ist zu erkennen, dass ein Bolzen 26 auch einen rechteckigen oder quadratischen Querschnitt haben kann. Weitere mehreckige Querschnitte sind ebenfalls möglich. Die Längserstreckung 26 a und die Quererstreckung 26 b kann beispielsweise maßgeblich für die Größe der Ausnehmung 14 und 20 sein. Insbesondere ist die Ausnehmung 14 in Y-Achse 4 größer als die Quererstreckung 26a. Die Ausnehmung 14 ist entlang der X-Achse 6 größer als die Quererstreckung 26b. Die Ausnehmung 22 ist bevorzugt entlang der Y-Achse 4 genauso groß oder nur geringfügig größer als die Längserstreckung 26a. Die Ausnehmung 20 ist entlang der X-Achse 6 bevorzugt größer als die Quererstreckung 26b.

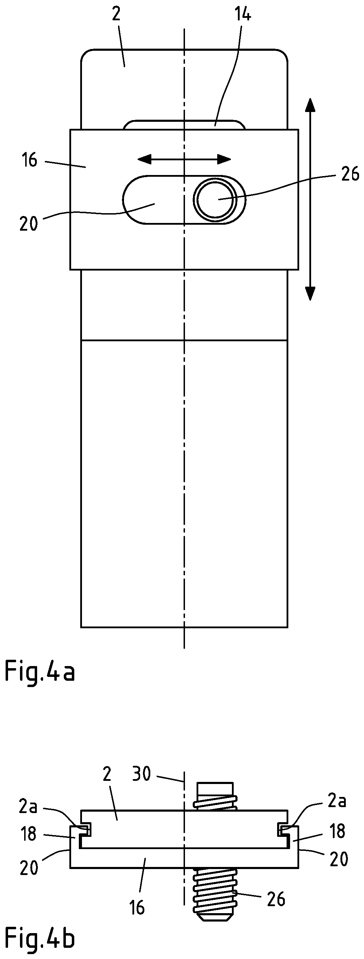

Zum Befestigen des Flachteils 2 an einem Bolzen 26 wird dieses, wie in den Figuren 4 - 8 gezeigt, auf einen Bolzen 26 aufgesteckt.

Die Figuren 4a, b zeigen eine Befestigung eines Flachteils 2 an einem Bolzen 26, bei dem der Bolzen 26 eine Abweichung von seiner Sollposition in der Bildebene nach rechts und nach unten hat.

Der Toleranzschieber 16 ist entlang der Y-Achse 4 auf dem Flachteil 2 verschiebbar. Die Verschieberichtung 28 entspricht der Ausrichtung der Y-Achse 4. Zum Befestigen des Flachteils 2 an dem Bolzen 26 wird die Ausnehmung 14 über den Bolzen 26 platziert und der Bolzen 26 wird durch die Ausnehmung 14 geschoben. Gleichzeitig wird der Toleranzschieber 16 entlang der Verschieberichtung 28 so auf dem Flachteil 2 positioniert, dass der Bolzen 26 auch durch die Ausnehmung 20 geführt werden kann. Zu erkennen ist, dass der Bolzen 26 durch den Toleranzschieber 16 so aufgenommen ist, dass insbesondere entlang der Y-Achse 4 die Ausnehmung 20 eng an dem Bolzen 26 anliegt. Dadurch kann der Bolzen 26 beispielsweise mittels Verschrauben an dem Flachteil 2 angeschraubt werden.

In der Fig. 4b ist zu erkennen, dass der Bolzen 26 von der Sollposition 30 nach rechts verschoben ist. Ferner ist zu erkennen, dass der Toleranzschieber 16 mit seinen Armen 18 in eine Nut 2a des Flachteils 2 an den Seitenflächen des Flachteils 2 eingreift.

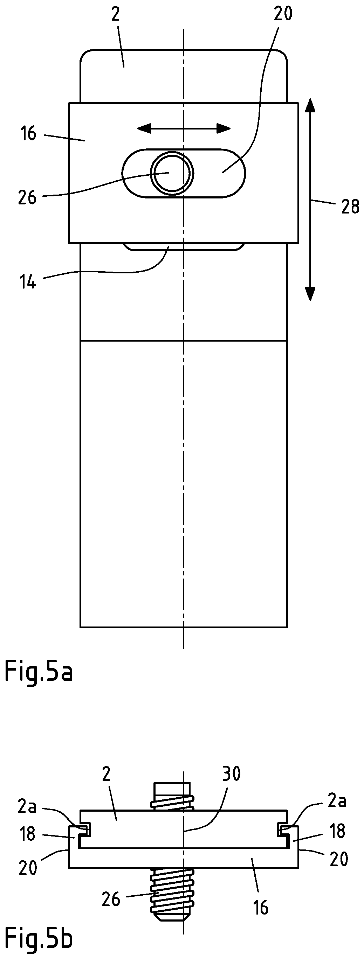

Fig. 5a zeigt ein weiteres Ausführungsbeispiel, bei dem der Bolzen 26 gegenüber der Sollposition 30 nach links und oben verschoben ist. Auch hier wird durch die Ausdehnung der Ausnehmung 14 erreicht, dass der Bolzen 26 problemlos in die Ausnehmung 14 eingesteckt werden kann. Das Flachteil 2 kann dabei in der Sollposition 30 verbleiben, obwohl der Bolzen 26 eine Toleranz hierzu hat. Durch Verschieben des Toleranzschiebers 16 entlang der Verschieberichtung 28 kann der Bolzen 26 in der Ausnehmung 20 positioniert werden.

Fig. 5b zeigt auch eine Positionierung des Bolzens 26 abweichend von einer Sollposition 30.

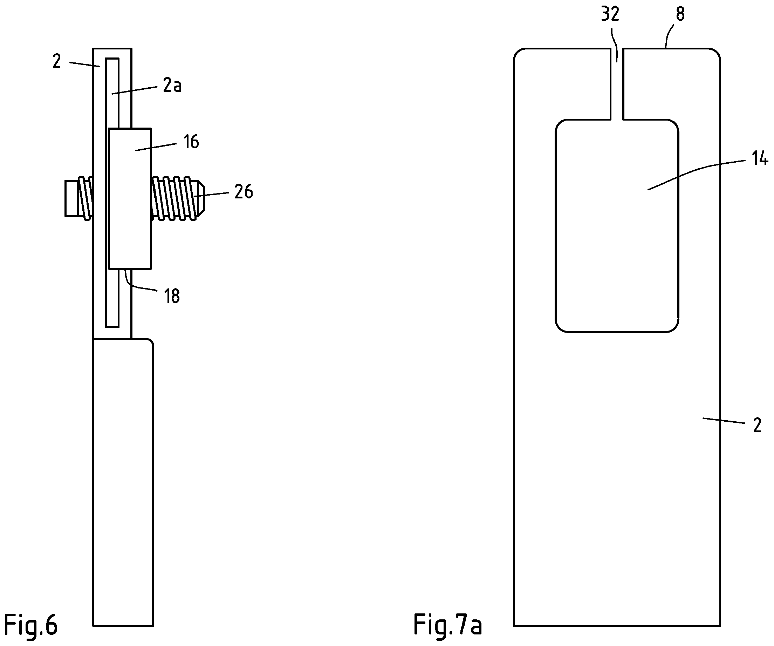

Fig. 6 zeigt eine Seitenansicht eines Toleranzausgleichs gemäß Fig. 5a. Zu erkennen ist, wie die Arme 18 in die Nut 2a eingreifen. Die Nut 2a erstreckt sich entlang der Ausnehmung 14.

Fig. 7a zeigt ein Flachteil 2, welches im Bereich der stirnseitigen Kante 8 einen Schlitz 32 aufweist. Der Schlitz 32 erstreckt sich von der stirnseitigen Kante 8 bis in die Ausnehmung 14. Durch den Schlitz 32 ist es möglich, das Flachteil 12 im Bereich der Ausnehmung 14 in Richtung der X-Achse 6 elastisch zu verformen. Dies kann insbesondere dann von Vorteil sein, wenn der Toleranzschieber 16 auf das Flachteil 2 aufgeschoben werden soll.

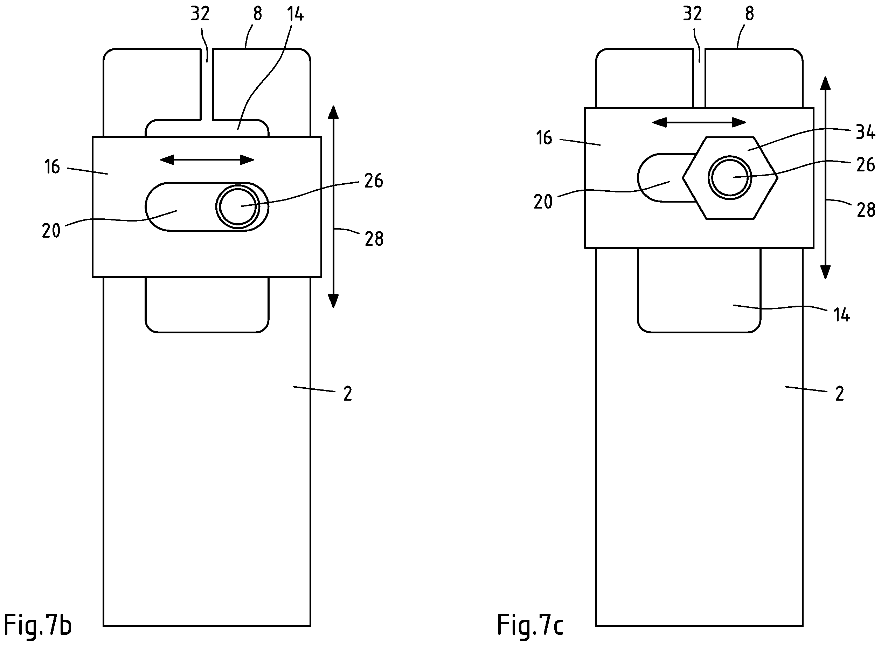

In der Fig. 7b ist zu erkennen, dass der Toleranzschieber 16 auf das Flachteil 2 aufgeschoben wurde. Dabei kann beispielsweise der Schlitz 32 dazu dienen, die stirnseitige Kante 8 zu stauchen, so dass der Toleranzschieber 6, welche mit seinen Armen 18 das Flachteil 2 umgreift auf das Flachteil 2 aufzuschieben. Durch die Rückstellkraft des Flachteils 2 wird der Schlitz 32 anschließend wieder aufgeweitet, wodurch der Toleranzschieber 16 beispielsweise klemmend an dem Flachteil 2 gehalten sein kann. Die Positionierung des Bolzens 26 in den Ausnehmungen 14, 20 gemäß der Fig. 7b erfolgt entsprechend der Fig. 4a.

Anschließend erfolgt eine Fixierung des Bolzens 26, wie es in der Fig. 7c gezeigt ist. Hierzu wird auf den Bolzen 26 beispielsweise eine Mutter 34 aufgeschraubt. Über eine nicht gezeigte Unterlegscheibe kann die Mutter 34 auf den Toleranzschieber 16 gedrückt werden. Dadurch erfolgt eine Fixierung des Flachteils 2 und des Toleranzschiebers 16 an dem Bolzen 26 und an dem Anbauteil, an welchem der Bolzen 26 befestigt ist.

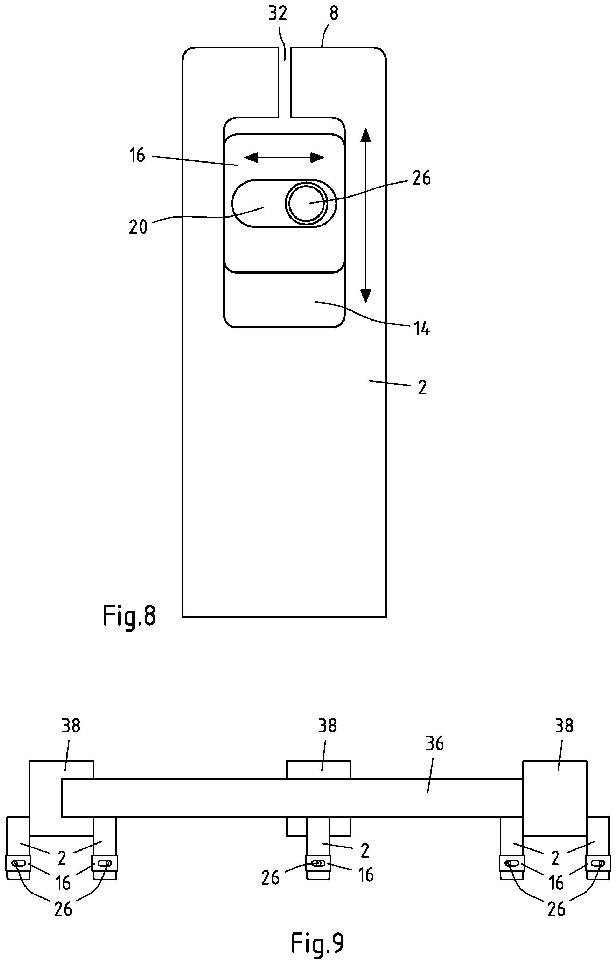

Fig. 8 zeigt ein weiteres Ausführungsbeispiel, bei dem der Toleranzschieber 16 in der Ausnehmung 14 geführt ist. Zu erkennen ist, dass der Toleranzschieber 16 mit seinen Längskanten 24 an den innenseitigen Längskanten der Ausnehmung 14 geführt ist. Hierzu kann der Toleranzschieber 14 beispielsweise in Nuten innerhalb der Innenflächen der Ausnehmung 14 eingreifen. Auch kann der Toleranzschieber 16 die Längskanten der Ausnehmung 14 umgreifen. Eine Positionierung des Bolzens 26 in den Ausnehmungen 14, 20 erfolgt in der Gestalt, dass der Toleranzschieber 16 in Verschieberichtung 28 in der Ausnehmung 14 verschoben wird, so dass er mit dem Bolzen 26 fluchtet. Anschließend kann der Bolzen 26 durch die Ausnehmung 20 und mithin die Ausnehmung 14 geführt werden und beispielsweise mit einer Mutter, wie in der Fig. 7c gezeigt, an dem Toleranzschieber 16 fixiert werden.

Fig. 9 zeigt ein weiteres Ausführungsbeispiel, bei dem eine Flachleitung 36 konfektioniert wird. Die Flachleitung 36 kann dabei beispielsweise als Doppelflachleitung ausgeführt sein und aus übereinander liegenden Flachteilen gebildet sein. Die Doppelflachleitung kann mit dem Batteriepluspol einerseits und dem Batterieminuspol andererseits verbunden sein. Entlang der Flachleitung 36 können an verschiedenen Positionen Abgriffe vorgesehen sein. So sind zwei oder mehr Abgriffe möglich. Diese Abgriffe können beispielsweise auf der Flachleitung 36 aufgeschweißt werden und mittels Koppelboxen 38 geschützt werden.

Die Flachleitung 36 kann um verschiedene Achsen gebogen werden, insbesondere um die Längsachse der Flachleitung 36 und/ oder die Querachse der Flachleitung 36 und/ oder eine Achse senkrecht zur Zeichenebene.

Die Koppelboxen 38 können zur Befestigung mit Grobgewindebolzen 26 vorgesehen sein. Hierzu sind an den Koppelboxen 38 Toleranzausgleiche mit Flachteil 2 und Toleranzschieber 16 vorgesehen. An einer Koppelbox 38 kann ein Toleranzausgleich oder können mehrere Toleranzausgleiche vorgesehen sein.

Die Bolzen 26 sind toleranzbehaftet auf der Karosserie angeschweißt. Um zu verhindern, dass bei der Fixierung der Flachleitung 36 diese verbogen werden muss, sind die gegenständlichen Toleranzausgleiche vorgesehen. An jedem der Toleranzausgleiche kann eine Toleranz eines Bolzens 26 durch Verschiebung des Toleranzschiebers 16 entlang des Flachteils 2 ausgeglichen werden. Somit lässt sich die Flachleitung 36 respektive die Koppelboxen 38 an den Bolzen 26 befestigen, ohne dass mechanische Spannungen sowohl an den Koppelboxen 38, den Bolzen 26 als auch den in den Koppelboxen 38 angeordneten Abgriffen auftreten können.

Zur Fixierung der Bolzen 26 an den Toleranzschiebern können beispielsweise Kunststoffmuttern vorgesehen werden, die mit wenigen Nutenmetern angezogen werden können.

An einer Koppelbox 38 können beispielsweise jeweils zwei Abgriffe, eine an einer unteren Flachleitung und eine an einer oberen Flachleitung vorgesehen sein, so dass die Doppelflachleitung 36 an ihren beiden Potenzialen abgegriffen werden kann.

### Bezugszeichenliste

- 2: Flachteil
- 4: Y-Achse
- 6: X-Achse
- 8: stirnseitige Kante
- 10: Längskante
- 12: breite Oberfläche
- 14: Ausnehmung
- 16: Toleranzschieber
- 18: Armen
- 20: Ausnehmung
- 22: Stege
- 24: Längskante
- 26: Bolzen
- 26a: Längserstreckung
- 26b: Quererstreckung
- 26c: Durchmesser
- 28: Verschieberichtung
- 30: Sollposition
- 32: Schlitz
- 34: Mutter
- 36: Flachleitung

## Patentansprüche

1. Toleranzausgleich mit
- einem Flachteil (2) mit einer ersten Ausnehmung (14) zur Aufnahme eines Bolzens (26) eines Anbauteils,
- einem Toleranzschieber (16) mit einer zweiten Ausnehmung (20) zur Aufnahme des Bolzen (26), wobei
- das Flachteil (2) eine sich von seiner stirnseitigen Kante (8) in Längsrichtung erstreckende Längsachse (4) und eine sich quer zur Längsachse (4) erstreckende Querachse (6) aufweist, wobei
- die erste Ausnehmung (14) in einer Richtung entlang der Längsachse (4) des Flachteils (2) eine größere Erstreckung hat als die zweite Ausnehmung (20) in dieser Richtung,
- die erste Ausnehmung (14) in einer Richtung entlang der Querachse (6) eine Erstreckung hat die zumindest der Erstreckung der zweiten Ausnehmung (20) in dieser Richtung entspricht, und
- der Toleranzschieber (16) zur Aufnahme des Bolzens (26) in der ersten und der zweiten Ausnehmung (14, 20) derart an dem Flachteil (2) angeordnet ist, dass er in einer Richtung entlang der Längsachse (4) des Flachteils (2) über die erste Ausnehmung (14) verschiebbar ist,
**dadurch gekennzeichnet,**
- **dass** das Flachteil (2) von einer stirnseitigen Kante (8) bis in die erste Ausnehmung (14) geschlitzt ist, und
- **dass** die stirnseitige Kante (8) durch den Schlitz (32) elastisch verformbar ist, so dass der Toleranzschieber (16) durch eine Kompression der stirnseitigen Kante (8) auf diese aufschiebbar ist.

2. Toleranzausgleich nach Anspruch 1,
**dadurch gekennzeichnet,**
- **dass** der Toleranzschieber (16) verliersicher an dem Flachteil (2) angeordnet ist.

3. Toleranzausgleich nach einem der vorangehenden Ansprüche,
**dadurch gekennzeichnet,**
- **dass** der Toleranzschieber (16) auf einer breiten Oberfläche des Flachteils (2) angeordnet ist und eine Längskante (10) des Flachteils (2), bevorzugt beide Längskanten (10) des Flachteils (2) hintergreift.

4. Toleranzausgleich nach einem der vorangehenden Ansprüche,
**dadurch gekennzeichnet,**
- **dass** der Toleranzschieber (16) in einer an einer Seitenfläche des Flachteils (2) angeordneten Nut geführt ist, insbesondere dass der Toleranzschieber (16) in die Nut eingreift.

5. Toleranzausgleich nach einem der vorangehenden Ansprüche,
**dadurch gekennzeichnet,**
- **dass** der Toleranzschieber (16) in der ersten Ausnehmung (14) geführt ist, insbesondere dass der Toleranzschieber (16) in einer an einer Innenkante der Ausnehmung (14) angeordneten Nut geführt ist oder dass der Toleranzschieber (14) eine Innenkante der Ausnehmung umgreift.

6. Toleranzausgleich nach einem der vorangehenden Ansprüche,
**dadurch gekennzeichnet,**
- **dass** die erste Ausnehmung (14) rechteckig oder quadratisch ist und/oder dass die zweite Ausnehmung (20) ein Langloch ist.

7. Toleranzausgleich nach einem der vorangehenden Ansprüche,
**dadurch gekennzeichnet,**
- **dass** die Querachse (6) des Flachteils (2) senkrecht zur Längsachse (4) des Flachteils (2) verläuft.

8. Toleranzausgleich nach einem der vorangehenden Ansprüche,
**dadurch gekennzeichnet,**
- **dass** die erste Ausnehmung (14) in der Richtung entlang der Längsachse (4) des Flachteils und der Querachse (6) eine Erstreckung hat, die zumindest einer Toleranz der Position des Bolzens (26) an dem Anbauteil entspricht.

9. Toleranzausgleich nach einem der vorangehenden Ansprüche,
**dadurch gekennzeichnet,**
- **dass** der Toleranzschieber (16) aus einem Metall oder einem Kunststoff gebildet ist.

10. System mit einem Toleranzausgleich nach einem der vorangehenden Ansprüche und einem Anbauteil, wobei ein Flachteil (2) mit dem Toleranzausgleich (16) an einem an dem Anbauteil angeordneten Bolzen (26) befestigt ist, wobei der Bolzen (26) toleranzbehaftet an dem Anbauteil befestigt ist und durch die ersten und die zweite Ausnehmung (14, 20) geführt ist.

11. System nach Anspruch 10,
**dadurch gekennzeichnet,**
- **dass** der Toleranzschieber (16) klemmend an dem Bolzen (26) gehalten ist.

## Claims

1. Tolerance compensation with
- a flat part (2) with a first recess (14) for receiving a bolt (26) of an attachment part,
- a tolerance slider (16) with a second recess (20) for receiving the bolt (26),
wherein
- the flat part (2) has a longitudinal axis (4) extending from its end face edge (8) in longitudinal direction and a transversal axis (6) extending transversally to the longitudinal axis (4), wherein
- the first recess (14) has a greater extent in a direction along the longitudinal axis (4) of the flat part (2) than the second recess (20) in that direction,
- the first recess (14) has an extension in a direction along the transversal axis (6) which corresponds at least to the extent of the second recess (20) in this direction, and
- the tolerance slider (16) for receiving the bolt (26) in the first and second recess (14, 20) is arranged on the flat part (2) in such a way that it can be displaced in a direction along the longitudinal axis (4) of the flat part (2) over the first recess (14),
**characterized in that**
- the flat part (2) is slotted from the front face edge (6) into the first recess (14)
and
- the end face edge (8) is elastically deformable due to the slot (32), so that the tolerance slider (16) can be pushed onto the end face edge (8) by compression of the end face edge (8).

2. Tolerance compensation according to claim 1,
**characterized in that,**
- the tolerance slider (16) is arranged on the flat part (2) so that it cannot be lost.

3. Tolerance compensation according to one of the preceding claims, **characterized in that,**
- the tolerance slider (16) is arranged on a wide surface of the flat part (2) and grips behind a longitudinal edge (10) of the flat part (2), preferably behind both longitudinal edges (10) of the flat part (2).

4. Tolerance compensation according to one of the preceding claims, **characterized in that,**
- the tolerance slider (16) is guided in a groove arranged on a side surface of the flat part (2), in particular **in that** the tolerance slider engages in the groove.

5. Tolerance compensation according to one of the preceding claims, **characterized in that,**
- the tolerance slider (16) is guided in the first recess (14), in particular that the tolerance slider (16) is guided in a groove arranged at an inner edge of the recess (14) or that the tolerance slider (16) embraces an inner edge of the recess

6. Tolerance compensation according to one of the preceding claims, **characterized in that,**
- the first recess (14) is rectangular or square and/or that the second recess (20) is an oblong hole.

7. Tolerance compensation according to one of the preceding claims, **characterized in that,**
- the transverse axis (6) of the flat part (2) is perpendicular to the longitudinal axis (4) of the flat part (2).

8. Tolerance compensation according to one of the preceding claims, **characterized in that,**
- the first recess (14) has an extent in the direction along the longitudinal axis (4) and the transversal axis (6) of the flat part which corresponds at least to a tolerance of the position of the bolt (26) on the attachment part.

9. Tolerance compensation according to one of the preceding claims, **characterized in that,**
- the tolerance slider (16) is made of a metal or a plastic.

10. System with a tolerance compensation according to one of the preceding claims and an attachment part, wherein a flat part (2) with the tolerance compensation (16) is attached to a bolt (26) arranged on the attachment part, wherein the bolt (26) is attached to the attachment part with tolerances and goes through the first and the second recess (14, 20).

11. System according to claim 10,
**characterized in that**,
the tolerance slider (16) is held in a clamping manner at the bolt (26).

## Revendications

1. Compensation de tolérance avec
- une pièce plate (2) avec un premier évidement (14) pour recevoir une tige (26) d'une pièce rapportée,
- une glissière de tolérance (16) avec un deuxième évidement (20) pour recevoir la tige (26),
- où la pièce plate (2) présente un axe longitudinal (4) s'étendant depuis son arête frontale (8) dans la direction longitudinale et un axe transversal (6) s'étendant transversalement à l'axe longitudinal (4),
- où le premier évidement (14) a une étendue plus grande dans une direction le long de l'axe longitudinal (4) de la pièce plate (2) que le deuxième évidement (20) dans cette direction,
- où le premier évidement (14) a une étendue dans une direction le long de l'axe transversal (6) qui correspond au moins à l'étendue du deuxième évidement (20) dans cette direction, et
- où la glissière de tolérance (16) destinée à recevoir la tige (26) dans le premier et le deuxième évidement (14, 20) est disposée sur la pièce plate (2) de telle manière qu'elle est déplaçable dans une direction le long de l'axe longitudinal (4) de la pièce plate (2), par-dessus le premier évidement (14),
**caractérisée**
- **en ce que** la pièce plate (2) est fendue à partir d'une arête frontale (8) jusque dans le premier évidement (14), et
- **en ce que** l'arête frontale (8) peut être déformée élastiquement par la fente (32), de sorte que la glissière de tolérance (16) peut être poussée sur l'arête frontale (8) en comprimant cette dernière.

2. Compensation de tolérance selon la revendication 1,
**caractérisée**
- **en ce que** la glissière de tolérance (16) est disposée sur la pièce plate (2) de telle sorte qu'elle ne puisse pas être perdue.

3. Compensation de tolérance selon l'une des revendications précédentes, **caractérisée**
- **en ce que** la glissière de tolérance (16) est disposée sur une large surface de la pièce plate (2) et s'engage derrière un bord longitudinal (10) de la pièce plate (2), de préférence les deux bords longitudinaux (10) de la pièce plate (2).

4. Compensation de tolérance selon l'une des revendications précédentes, **caractérisée**
- **en ce que** la glissière de tolérance (16) est guidée dans une rainure disposée sur une face latérale de la pièce plate (2), en particulier en ce que la glissière de tolérance (16) s'engage dans la rainure.

5. Compensation de tolérance selon l'une des revendications précédentes, **caractérisée**
- **en ce que** la glissière de tolérance (16) est guidée dans le premier évidement (14), en particulier en ce que la glissière de tolérance (16) est guidé dans une rainure disposée au niveau d'un bord intérieur de l'évidement (14), ou en ce que la glissière de tolérance (14) s'engage autour d'un bord intérieur de l'évidement.

6. Compensation de tolérance selon l'une des revendications précédentes, **caractérisée**
- **en ce que** le premier évidement (14) est rectangulaire ou carré et/ou en ce que le deuxième évidement (20) est un trou allongé.

7. Compensation de tolérance selon l'une des revendications précédentes, **caractérisée**
- **en ce que** l'axe transversal (6) de la pièce plate (2) est perpendiculaire à l'axe longitudinal (4) de la pièce plate (2).

8. Compensation de tolérance selon l'une des revendications précédentes, **caractérisée**
- **en ce que** le premier évidement (14) présente une étendue dans la direction de l'axe longitudinal (4) de la pièce plate et de l'axe transversal (6), laquelle étendue correspond à au moins une tolérance de la position de la tige (26) sur la pièce rapportée.

9. Compensation de tolérance selon l'une des revendications précédentes, **caractérisée**
- **en ce que** la glissière de tolérance (16) est formée d'un métal ou d'un plastique.

10. Système avec une compensation de tolérance selon l'une des revendications précédentes et une pièce rapportée, où une pièce plate (2) avec la compensation de tolérance (16) est fixée à une tige (26) disposée sur la pièce de fixation, où la tige (26) est fixée à la pièce de fixation avec en tenant compte d'une tolérance et est guidée à travers le premier évidement (14) et le deuxième évidement (20).

11. Système selon la revendication 10,
**caractérisé**
- **en ce que** la glissière de tolérance (16) est maintenue par serrage sur la tige (26).
